# EUROPEAN PATENT SPECIFICATION

(11) **EP 1 897 788 B1**
(45) Date of publication and mention of the grant of the patent: **11.08.2010**
(21) Application number: 07017529.4
(22) Date of filing: 07.09.2007
(51) Int. Cl.: B62D 25/20, B62D 29/00

(54) **Bed for automobile made in a composite material**
Bodenstruktur an Kraftfahrzeugen aus Verbundwerkstoff
Structure de plancher pour véhicule automobile en matériau composite

(30) Priority: 11.09.2006 IT MI20061727
(43) Date of publication of application: 12.03.2008
(73) Proprietor: Jelley Limited, Dublin 4 (IE)
(72) Inventor: Stirano, Giorgio, 98000 Monaco (MC)
(74) Representative: Petruzzelli, Antonio

(56) References cited:
- EP-A- 1 942 039
- DE-A1- 19 608 127
- DE-A1- 19 806 484
- DE-U1- 20 118 424
- FR-A- 2 687 974
- US-A- 4 931 340
- US-A1- 2006 165 972
- US-B1- 6 375 249
- FRUTIGER R L ET AL: "COMPOSITE FLOORPAN" AUTOMOTIVE ENGINEERING, SOCIETY OF AUTOMOTIVE ENGINEERS. WARRENDALE, US, vol. 101, no. 2, 1 February 1993 (1993-02-01), pages 39-43, XP000349641 ISSN: 0098-2571

## Description

The chassis of automobiles are usually made via structural solutions of the space frame type, i.e. with varyingly produced elements joined one to the other to form a reticular structure, or by means of simple tubes with circular, square or rectangular section formed through extrusion. Another solution is represented by more complex tubular elements made by bending, moulding and pot die forming and joined one to the other by means of welding techniques of the MIG/TIG (Metal Inert Gas/Tungsten Inert Gas) type.

In 95% of cases current automobile production adopts the solution of the shell moulded and spot-welded in steel sheet and the remainder solutions in aluminium alloy of the space frame type.

From some years it's known the technique that allows the production of planar structural members composed of two skins, usually in aluminium sheet, separated one from the other by a cellular structure. See for example DE 19 806 484.

These members, also known as sandwich, have the merit of combining properties of lightness with the capacity for withstanding high stresses (above all due to compression load and flexion/torsion load), leading to their widespread use in various areas such as building and transport.

During the 1990s Jaguar designed and produced a car known as XJ 220, whose chassis was formed completely by stabilised sandwich panels in aluminium with cellular core which were bonded and riveted. The technology adopted was somewhat simple and involved the use of various flat panels connected one to the other, mainly via bonding and riveting which, given the plurality of the elements connected, did not allow particularly high performances of torsional and flexural rigidity to be obtained and was therefore abandoned.

The current tendency for the development of high-performance chassis is represented by the production of structures in composite materials based on carbon fibres integral or associated with structures in metallic materials, which however have costs that are too high to allow the adoption of this solution in the mass production of cars.

The object of the present invention is that of producing a bed for an automobile composed of a member in a composite material in aluminium alloy with cellular core wherein torsional and flexural rigidity is achieved through the intrinsic stability obtained from said member with cellular core and wherein this member is reinforced by the addition of longitudinal members and of annexed members connected one to the other by known techniques of welding, bonding or mechanical connection by riveting.

Another object of the present invention is the increase in the working mechanical properties and those of resistance to impact in relation to a low weight of the bed due to the use of a single member with cellular core provided with appropriate bends and the consequent homogeneity of the structure obtained from the invention.

A further object of the present invention is the substantial reduction in the time to market, from design to production of vehicles of small and medium production ranges, and in the costs in all the phases of production.

All these objects are achieved by a composite bed, with the features disclosed according to the present invention.

The member in composite material with cellular core, or sandwich, is of the type already known and comprises two aluminium alloy sheets, known as skins, spaced and connected with a core made up of a cellular structure in aluminium or alternative materials with similar structural features and with the possibility of being connected to the skins by various systems of bonding, laser welding, etc., already known.

This type of structure shows, as demonstrated by experimental tests, a stability at compression loads higher than the simple flat sheets used as basic elements for its production.

The torsional and flexural rigidity, which in current design techniques is obtained thanks to a construction concept which can be defined as "reticular" and involving the use of various components, is obtained in this case from the intrinsic structural properties of the member with cellular core.

The main feature of the invention consists of the use of a single composite member, as described above, with cellular core, as the basic structural component for the production of the bed, which member is machined and whereto reinforcement members are associated according to the specific needs inherent in the reactions to the stresses caused by the concentrations of force which are a result of the loads due to the suspensions, assembly of the bodywork, payload, compliance and to the safety regulations for the vehicles.

Where a surface dimension of the cellular sandwich member is required that is higher than the production availability of aluminium sheets, due to the limitation of the production technologies, it could be made in two or more parts, joined by bonding, riveting , spot or continuous welding, such as to make it substantially a single component.

Through the use of a single member obtained in this way for the production of the bed, eliminating therefore the joints between the various component elements of a classic bed and therefore excluding the reductions in rigidity due to these joints, the structural properties of the entire chassis are increased.

The introduction of reinforcement structural components serves to increase further the properties of rigidity of the base member. The dimensioning of these components, or even their inclusion, obviously depends on the features of the vehicle. Vehicles with high performances, such as for example sports cars, will require adequate dimensioning of these components, while less stringent limitations may be applied to vehicles such as economy cars.

These and other features will be made clearer on reading a preferred embodiment of the present invention, to be read by way of a nonlimiting example of the more general concepts claimed.

The following description refers to the accompanying drawings, in which:
Figure 1 is a side view of a sandwich member with core in cellular aluminium;
Figures 2, 3 and 4 are respectively a perspective side view of the bed with longitudinal bends, a perspective side view of the bed with front and rear extensions and a perspective side view of the bed with transverse bends;
Figure 5 is a side view of the detail of the connection between the sandwich member with cellular core and a reinforcement member;
Figure 6 is a exploded view of a preferred embodiment of the invention, wherein the bed is shown in relation to the members for reinforcement and support of the mechanical parts;
Figure 7 is a perspective side view of the bed made through the joining of two separate sandwich members with core in cellular aluminium;
Figure 8 is a detail of the attachment joint of the two sandwich members.

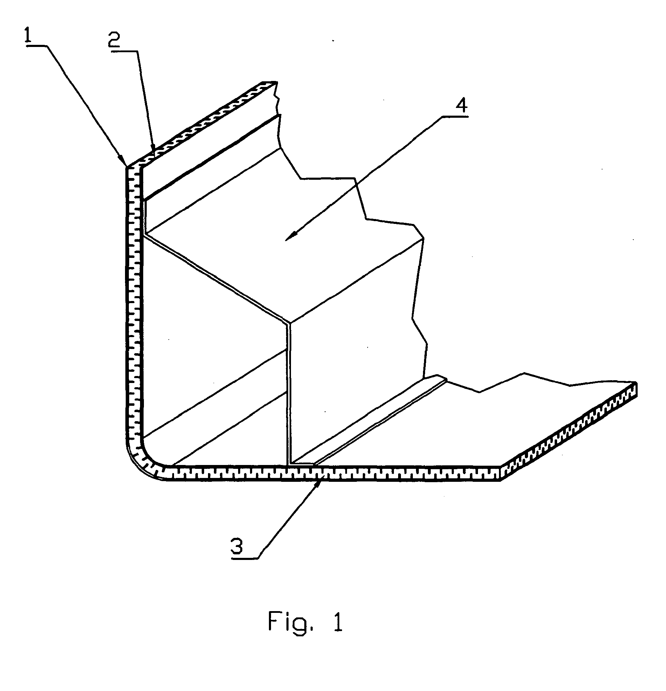

Referring to Figure 1, the two skins 1 and 2 are shown which make up the external skin and the internal skin respectively of the sandwich member, joined one to the other by the cellular core 3.

The sandwich member can be bent in relation to the horizontal plane with various slants, according to the structural features sought, and in order to increase its rigidity a reinforcement sheet 4 can be attached to it which connects the horizontal part of the member to the slanted part at the bend.

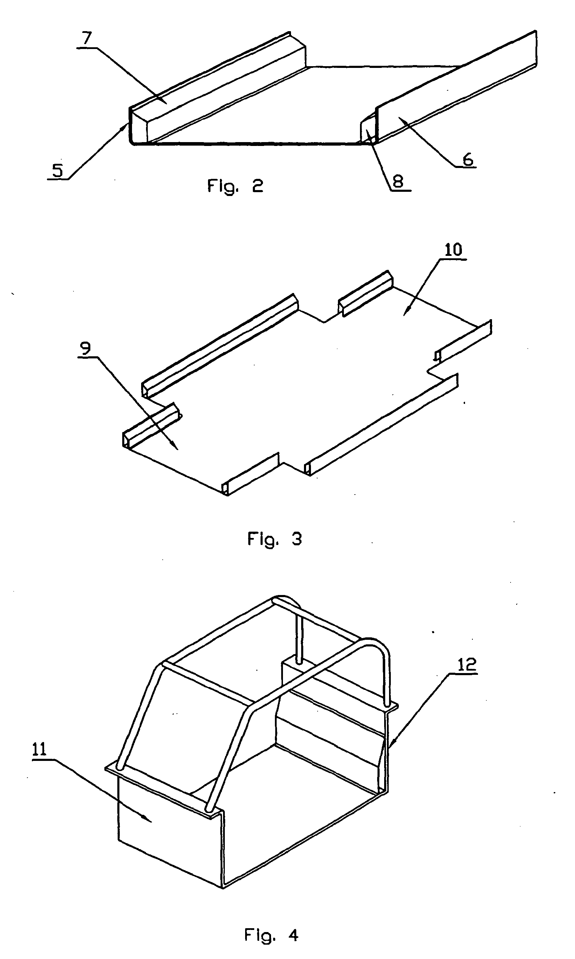

Referring to Figure 2, an embodiment of the bed is shown wherein the sandwich member has been bent at the two side ends 5 and 6 longitudinally in relation to the direction of travel of the vehicle. These bends increase the structural properties of flexural and torsional rigidity, properties which are further increased by the reinforcement sheets 7 and 8. In this embodiment the bed extends for a length comparable to that of the interior compartment of the car.

Referring to Figure 3, an embodiment is shown wherein the bed also extends below the mechanical parts, having two extensions 9 and 10 which serve to increase substantially the structural properties of the chassis.

This configuration in fact allows exploitation of the sandwich bed also as an element dedicated to the absorption of impact, thanks to the high capacity of the same for withstanding compression loads.

Referring to Figure 4, an embodiment is shown wherein the bed has two bends formed transversely in relation to the direction of travel, so as to form two flame traps, a front one 11 and a rear one 12, which integrate with the structure of the interior compartment.

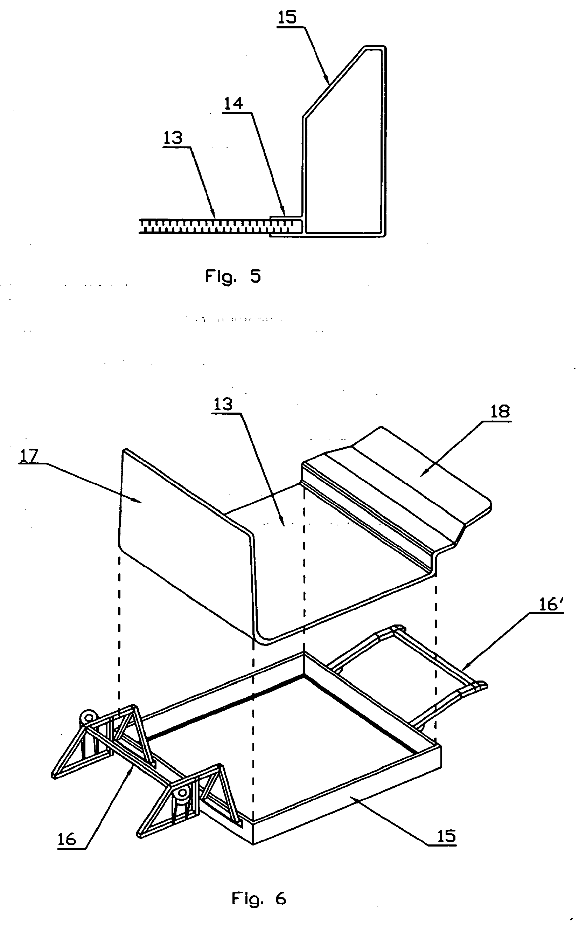

Referring to Figure 5, the detail is shown of the method of connection between the reinforcement members 15 and the bed formed by the sandwich 13. These members are made with a shape which has an appendage 14 with C section of such dimensions as to allow the insertion of the cellular member 13 inside thereof, said appendage extending along the entire length of the member. This configuration allows the internal surface of said C section to be placed in contact with the external skins of the cellular member, thus allowing the bonding, riveting or another known equivalent technique of connection between the member 15 and sandwich 13.

Referring to Figure 6, a preferred embodiment of the invention is shown overall, wherein the bed 13 has two bends 17 and 18, transverse in relation to the direction of travel, which perform the role of rear and front flame trap respectively. The bed 13 is connected to the structure 15 composed of reinforcement members whose function is to increase the structural properties of the chassis overall. Each reinforcement member of said structure has the C section described previously to allow attachment between the bed and the member itself.

To said structure 15 the structures 16 and 16' are connected whose function is to support the mechanical parts such as engine, suspensions, etc.

These support structures are already known and used normally in the manufacture of cars and do not have specific importance in terms of innovation. The methods of attachment of these structures 16, 16' to the structure 15 are also represented by welding or another equivalent technique of a type already known.

In an alternative embodiment the structures 16 and 16' are attached directly to the bed 13. To enable this operation it is necessary that on each member there is an appendage with C section, equivalent to that provided for the reinforcement members described previously, which allows attachment between bed and structure.

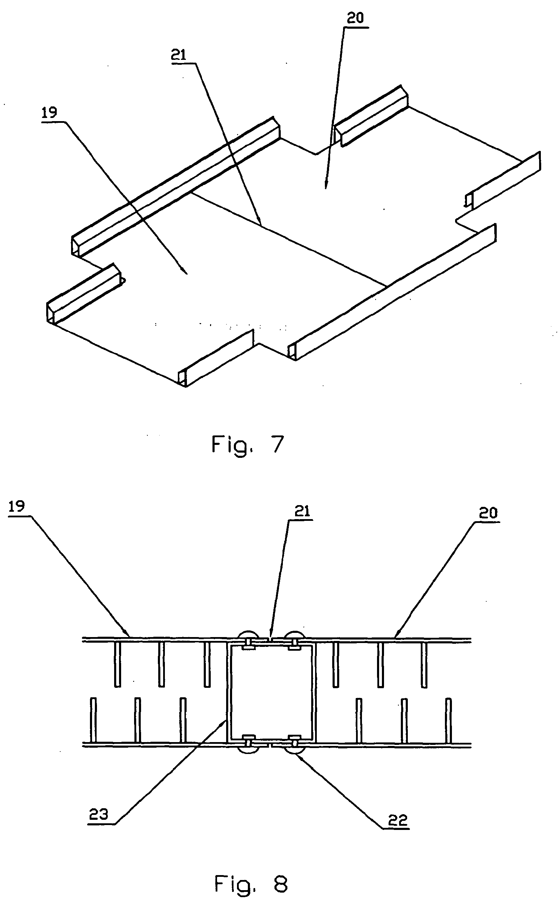

Referring to Figure 7, an alternative embodiment of the bed is shown through the joining of two separate sandwich members 19 and 20, attached along the joint 21 via known attachment systems.

Referring to Figure 8, a technique of attachment via riveting is shown, wherein the two sandwiches 19 and 20 are joined by means of the rivets 22 to a structure with rectangular section 23.

This technique of attachment, or one of its equivalents, provides the bed overall with mechanical properties comparable to those that can be obtained via a single member in composite material which extends along the entire length of the bed.

This alternative embodiment has been developed to meet the most widely differing design needs, thus avoiding having to restrict the dimensions of the bed to the maximum dimensions technically obtainable for a single sandwich member.

Thus a bed for automobile is produced, composed of a cellular aluminium sandwich member, with members for the reinforcement and support of the engine parts which overall has high structural properties and outstanding constructional simplicity.

This cellular sandwich member can in general have dimensions, shape and bends which vary according to the design intention, both as regards structural performances, i.e. torsional and flexural rigidity and resistance to impact, and as regards the architecture of the vehicle, providing this invention with the widest range of application.

## Claims

1. Load-bearing bed for an automobile in composite sheet composed of two skins (1, 2) formed by sheets of aluminium alloy spaced and connected with a core (3) formed by a structure in cellular aluminium, **characterised in that** said bed for an automobile is composed of a single member (13), with one or more transversal and/or longitudinal bends so as to improve the flexional and torsional rigidity of the structural, member.

2. Load-bearing bed for an automobile in composite sheet of two skins (1, 2) formed by sheets of aluminium alloy spaced and connected with a core (3) formed by a structure in cellular aluminium, **characterised in that** said bed for an automobile is composed of two members (19, 20) joined one to the other by riveting or by another known mean of connection; with one or more trasversal and/or longitudinal bends so as to improve the flexional and torsional rigidity of the structural member.

3. Load-bearing bed for an automobile according to claim 1 or 2, **characterised in that** said member (13, 19, 20) extends for a length equal to that of the interior compartment of the car and has at least two bends at the side ends (5, 6) formed longitudinally in relation to the direction of travel of the vehicle so as to improve the flexional and torsional rigidity of the structural member.

4. Load-bearing bed for an automobile according to claim 1 or 2, **characterised in that** said member (13, 19, 20) extends beyond the length of the interior compartment, projecting below the mechanical parts via at least one extension (9, 10) and has at least two bends at the side ends formed longitudinally in relation to the direction of travel of the vehicle.

5. Load-bearing bed for an automobile according to claim 1 or 2, **characterised in that** said member (13, 19, 20) has at least one bend formed transversely in relation to the direction of travel so as to form a flame trap (11, 12) which integrates with the structure of the interior compartment.

6. Load-bearing bed for an automobile according to previous claims, **characterised in that** at each bend of the member in composite sheet (13, 19, 20) a reinforcement member (4) can be associated, attached by bonding, riveting or another known attachment technique which connects the horizontal part of said member (13, 19, 20) to the slanting part.

## Patentansprüche

1. Lasttragende Bodenstruktur für Kraftfahrzeuge aus Verbundfolie bestehend aus zwei Schichten (1, 2) aus Leichtmetallfolien, die mit Zwischenräumen versehen und mit einem aus einer zellularen Aluminiumstruktur bestehenden Innenteil (3) verbunden sind, **dadurch gekennzeichnet, dass** genannte Bodenstruktur für Kraftfahrzeuge aus einem einzelnen Element (13) besteht, mit einem oder mehreren quer und/oder längs verlaufenden Abbiegungen zum Stärken der Flexions- und Torsionssteifigkeit des strukturellen Elements.

2. Lasttragende Bodenstruktur für Kraftfahrzeuge aus Verbundfolie bestehend aus zwei Schichten (1, 2) aus Leichtmetallfolien, die mit Zwischenräumen versehen und mit einem aus einer zellularen Aluminiumstruktur bestehenden Innenteil (3) verbunden sind, **dadurch gekennzeichnet, dass** genannte Bodenstruktur für Kraftfahrzeuge aus zwei Elementen (19, 20) besteht, die durch Vernietung oder andere bekannten Verbindungsvorrichtung miteinander verbunden sind, mit einem oder mehreren quer und/oder längs verlaufenden Abbiegungen zum Stärken der Flexions- und Torsionssteifigkeit des strukturellen Elements.

3. Lasttragende Bodenstruktur für Kraftfahrzeuge nach Anspruch 1 oder 2, **dadurch gekennzeichnet, dass** sich genanntes Element (13, 19, 20) genau so lang wie das Innenabteil des Wagens erstreckt und an den Seitenenden mindestens zwei der Länge nach zur Fahrtrichtung des Kraftfahrzeugs gebildete Abbiegungen (5, 6) zum Verstärken der Flexions- und Torsionssteifigkeit des strukturellen Elements aufweist.

4. Lasttragende Bodenstruktur für Kraftfahrzeuge nach Anspruch 1 oder 2, **dadurch gekennzeichnet, dass** sich genanntes Element (13, 19, 20) über die Länge des Innenabteils hinaus erstreckt und dabei unterhalb der mechanischen Teile durch mindestens eine Fortsatz (9, 10) vorspringt und mindestens zwei der Länge nach zur Fahrtrichtung des Kraftfahrzeugs gebildete Abbiegungen an den Seitenenden aufweist.

5. Lasttragende Bodenstruktur für Kraftfahrzeuge nach Anspruch 1 oder 2, **dadurch gekennzeichnet, dass** genanntes Element (13, 19, 20) mindestens eine schräg zur Fahrtrichtung gebildete Abbiegung aufweist, sodass eine in die Struktur des Innenabteils eingebaute Flammensperre (11, 12) gebildet wird.

6. Lasttragende Bodenstruktur für Kraftfahrzeuge nach vorstehenden Ansprüchen, **dadurch gekennzeichnet, dass** an jeder Abbiegung des Verbundfolienelementes (13, 19, 20) ein Verstärkungselement (4) angeklebt, vernietet oder durch andere bekannten Verbindungstechnik angebracht werden kann, das den waagerechten Teil des genannten Elementes (13, 19, 20) mit dem Schrägteil verbindet.

## Revendications

1. Structure de plancher porteur pour véhicule automobile en tôle composite composée de deux couches (1, 2) formées par des tôles en alliage d'aluminium espacées et reliée par un noyau (3) formé par une structure en aluminium cellulaire, **caractérisée par le fait que** ladite structure de plancher pour véhicule automobile se compose d'un seul membre (13) avec une ou plusieurs pliures transversales et/ou longitudinales afin d'améliorer la rigidité en torsion et en flexion du membre structurel.

2. Structure de plancher porteur pour véhicule automobile en tôle composite composée de deux couches (1, 2) formées par des tôles en alliage d'aluminium espacées et reliées par un noyau (3) formé par une structure en aluminium cellulaire, **caractérisée par le fait que** ladite structure de plancher pour véhicule automobile se compose de deux membres (19, 20) reliés entre eux par rivetage ou par un autre moyen connu de connexion, une ou plusieurs pliures transversales et/ou longitudinales afin d'améliorer la rigidité en torsion et en flexion du membre structurel.

3. Structure de plancher porteur pour véhicule automobile selon la revendication 1 ou 2, **caractérisée par le fait que** ledit membre (13, 19, 20) s'étend sur une longueur égale à celle du compartiment intérieur du véhicule et possède au moins deux pliures aux extrémités (5, 6) formées longitudinalement par rapport à la direction de déplacement du véhicule, afin d'améliorer la rigidité en torsion et en flexion du membre structurel.

4. Structure de plancher porteur pour véhicule automobile selon la revendication 1 ou 2, **caractérisée par le fait que** ledit membre (13, 19, 20) s'étend au-delà de la longueur du compartiment intérieur, en saille au-dessous des parties mécaniques à l'aide d'un minimum d'une extension (9, 10) et possède au moins deux pliures aux extrémités formées longitudinalement par rapport à la direction de déplacement du véhicule.

5. Structure de plancher porteur pour véhicule automobile selon la revendication 1 ou 2, **caractérisée par le fait que** ledit membre (13, 19, 20) possède un minimum d'une pliure formée transversalement par rapport à la direction de déplacement de manière à former un pare-flamme (11, 12) qui s'intègre avec la structure du compartiment intérieur.

6. Structure de plancher porteur pour véhicule automobile selon les revendications précédentes, **caractérisée par le fait qu'**à chaque pliure du membre en tôle composite (13, 19, 20) un membre de renfort (4) peut être associé, fixé par collage, rivetage ou une autre technique connue de fixation qui relie la partie horizontale dudit membre (13, 19, 20) à la partie inclinée.
